(19) Europäisches Patentamt
European Patent Office
Office européen des brevets

(11) EP 4 723 011 A1

(12) EUROPEAN PATENT APPLICATION
published in accordance with Art. 153(4) EPC

(43) Date of publication:
08.04.2026 Bulletin 2026/15

(21) Application number: 24818952.4

(22) Date of filing: 12.01.2024

(51) International Patent Classification (IPC):
G06Q 10/20 (2023.01)

(52) Cooperative Patent Classification (CPC):
G06Q 10/20

(86) International application number:
PCT/JP2024/000582

(87) International publication number:
WO 2024/252709 (12.12.2024 Gazette 2024/50)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 05.06.2023 JP 2023092763

(71) Applicant: Hitachi Industrial Equipment Systems
Co., Ltd.
Tokyo 101-0021 (JP)

(72) Inventors:
• HAN Lu
  Tokyo 100-8280 (JP)
• UCHIDA Takayuki
  Tokyo 100-8280 (JP)

(74) Representative: MERH-IP Matias Erny Reichl
Hoffmann
Patentanwälte PartG mbB
Paul-Heyse-Straße 29
80336 München (DE)

(54) EQUIPMENT MAINTENANCE SYSTEM AND EQUIPMENT MAINTENANCE METHOD

(57) Compare the costs of both on-site support and remote support and propose a cost-effective maintenance method.

An equipment maintenance system determines a support method to support equipment failures comprising: an asset knowledge database stores equipment failures and their causes are registered, an input section receives fault information output from the equipment, a cause of failure presumption section refers to the asset knowledge database and presumes the causes of failure based on the failure information received by the input section, a support method determination section determines the support method to support the presumed cause of failure, a cost estimating section estimates the cost required for the support method determined by the support method determination section dividing into the cost of on-site support, in which technicians visit the site where the equipment is installed, and the cost of remote support, in which technicians support the equipment remotely, and an output section outputs the support method with the lowest cost among the cost of on-site support and the cost of remote support estimated by the cost estimating section.

Fig.1

**Description**

TECHNICAL FIELD

This invention relates to an equipment maintenance system and equipment maintenance method.

BACKGROUND ART

When equipment such as an industrial multifunction printer causes malfunctions, the maintenance department interviews the user about the symptoms and estimates the possible causes of the malfunction. Based on the results of this estimation, it is necessary to decide whether to provide remote support or travel to the user site where the equipment is installed.

There are two types of support methods for failure: remote maintenance and on-site maintenance. In Patent Literature 1, maintenance support system is disclosed. There is a maintenance support tree information management section that manages maintenance support tree information, including candidates for corrective actions required for restoration of failure phenomena and information on diagnostic work to identify them, and in the above maintenance support tree, an optimal work section that calculates the starting point of work that minimizes the expected value of work cost or work time using the number of past cases, experience values of maintenance workers, diagnostic work, and cost information for each work. The maintenance support system is equipped with a diagnostic work execution section that updates the above maintenance support tree information reflecting the results of the executed work to repeat the above calculation of the optimal work until the restoration of the device to be maintained is completed.

CITATION LIST

PATENT DOCUMENT

[Patent documents 1] Japanese unexamined patent publication Tokkai2013-29881

SUMMARY OF THE INVENTION

PROBLEMS TO BE SOLVED BY THE INVENTION

However, the maintenance support system of Patent Document 1 does not consider the costs related to travel time and transportation costs required for the business trips needed when performing maintenance services.

The purpose of this invention is to quantify the costs related to travel time and transportation costs required for business trips using the causes of failure presumption result, to compare the costs of both on-site and remote maintenance services, and to propose a cost-effective maintenance method.

SOLUTIONS TO PROBLEMS

The purpose of the present invention is achieved by an equipment maintenance system determines a support method to support equipment failures comprising: an asset knowledge database stores equipment failures and their causes are registered, an input section receives fault information output from the equipment, a cause of failure presumption section refers to the asset knowledge database and presumes the causes of failure based on the failure information received by the input section, a support method determination section determines the support method to support the presumed cause of failure, a cost estimating section estimates the cost required for the support method determined by the support method determination section dividing into the cost of on-site support, in which technicians visit the site where the equipment is installed, and the cost of remote support, in which technicians support the equipment remotely, and an output section outputs the support method with the lowest cost among the cost of on-site support and the cost of remote support estimated by the cost estimating section.

EFFECTS OF THE INVENTION

The invention makes it possible to quantify costs related to travel time and transportation costs required for business trips and to propose cost-effective maintenance methods.

BRIEF DESCRIPTION OF THE DRAWINGS

Fig.1 Example of system configuration diagram in this invention

Fig.2 Example of maintenance knowledge data in this invention

Fig.3 Example of failure probability in this invention

Fig.4 Example of child node abnormality probability at parent node abnormality in the example of this invention

Fig.5 Example of child node abnormality probability at parent node is normal

Fig.6 Example of maintenance knowledge Bayesian network in the example of this invention

Fig.7 Example flowchart of the generation process of the maintenance knowledge Bayesian network in the example of this invention

Fig.8 Example flowchart of the causes of failure presumption process in an example of this invention

Fig.9 Example of causes of failure presumption result in the example of this invention

Fig.10 Example of failure cause support table in an example of this invention

Fig.11 Example of travel expenses table in this invention

Fig.12 Example of support method data for an example of this invention

Fig.13 Example of on-site support data for this invention

Fig.14 Example of remote support data in an example of this invention

Fig.15 Example flowchart of the decision support process for on-site and remote support methods in this example

Fig.15A Example of process S34 of the flowchart of the decision support process for on-site and remote support methods in the example of this invention

Fig.15B Example of process S35 of the flowchart of the decision support process for on-site and remote support methods in the example of this invention

Fig.15C Example of process S36 of the flowchart of the decision support process for on-site and remote support methods in the example of this invention

Fig.15D Example of process S37 of the flowchart of the decision support process for on-site and remote support methods in the example of this invention

Fig.16 Example of input screen in the example of this invention

Fig.17 Example of the result screen in the example of this invention

MODE FOR CARRYING OUT THE INVENTION

The following examples of the invention will be described using the drawings. In each of the figures used to illustrate the examples, the same names and codes will be used for the same components as much as possible, and repeated explanations will be omitted.

The present invention is not limited to the examples described below but includes various variations and equivalent configurations within the scope of the appended claims. For example, the examples are described in detail for the purpose of explaining the invention in an easy-to-understand manner, and the invention is not necessarily limited to those having all the configurations described.

In addition, some or all the processing parts described in the examples may be realized in hardware, for example, by designing them in an integrated circuit, or in software by having a processor interpret and execute a program that realizes the respective functions.

The tables, areas, etc. described in the examples can be databases (DB) or data stored in main memory. The following is a detailed description of the embodiment of the invention with reference to each figure.

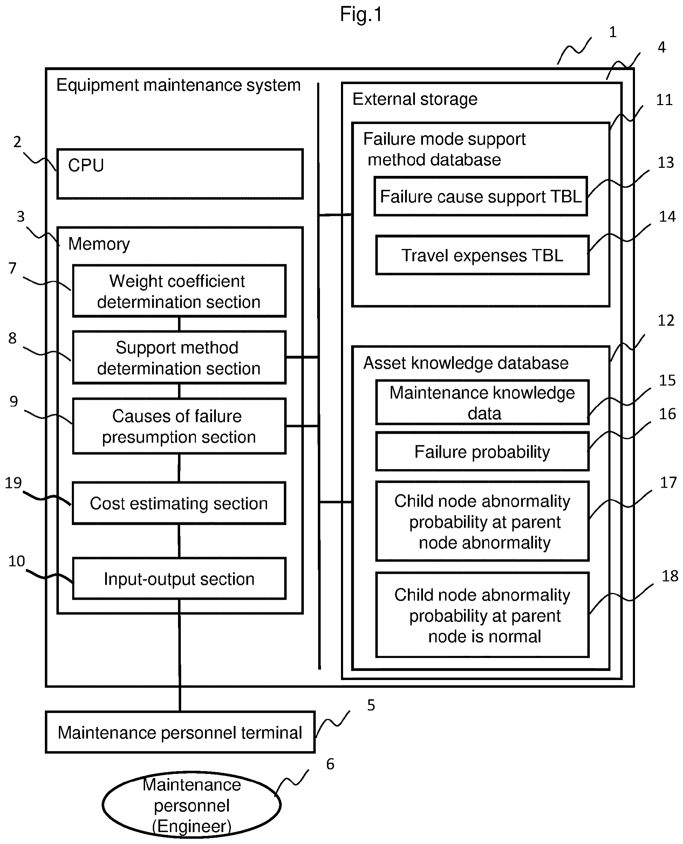

Fig. 1 shows an example of a system configuration diagram for an example of this invention. The equipment maintenance system comprises a computer equipped with a central processing unit (CPU)2, memory3 and external storage4. In this example, a stand-alone computer is used, but it can also be realized on a server in the cloud, or each function can be divided and realized by multiple computers.

The memory3 includes a weight coefficient determination section7 that determines whether to prioritize monetary or time costs in the calculation, a support method determination section8 that determines whether maintenance is performed remotely or on-site by traveling, a cost estimation section9 that estimates the costs of failure presumption based on the condition of the equipment and alarms entered, and a cost estimation section19 that estimates the costs of responding to failures, and input-output section10, which performs input-output processing.

External storage 4 contains a failure mode support method database11 and an asset knowledge database12. The failure mode support method database11 contains a failure cause support TBL (table)13 that defines whether remote support or on-site support is provided for failures, and a travel expenses TBL (table) that describes the time and cost required for business trips.

The asset knowledge database12 contains maintenance knowledge data15 that maps functional failures and alarms to the failure modes that cause them, failure probability16 that stores the probability of failure causes occurring, child node abnormality probability at parent node abnormality17, and child node abnormality probability at parent node is normal18.

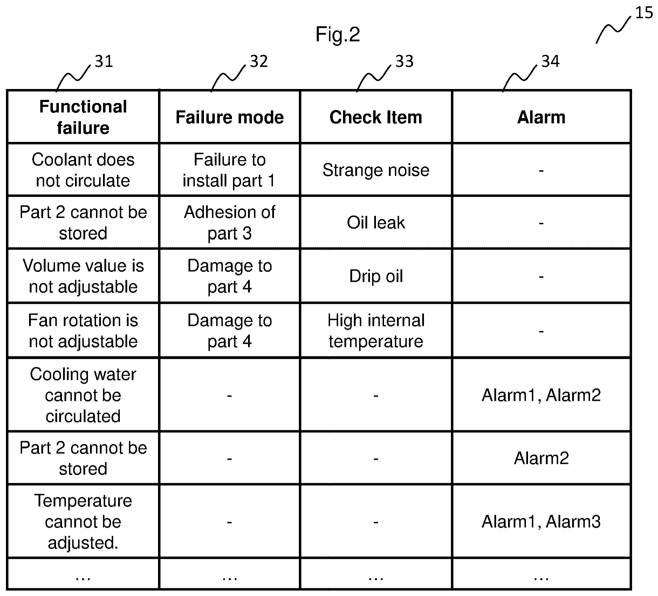

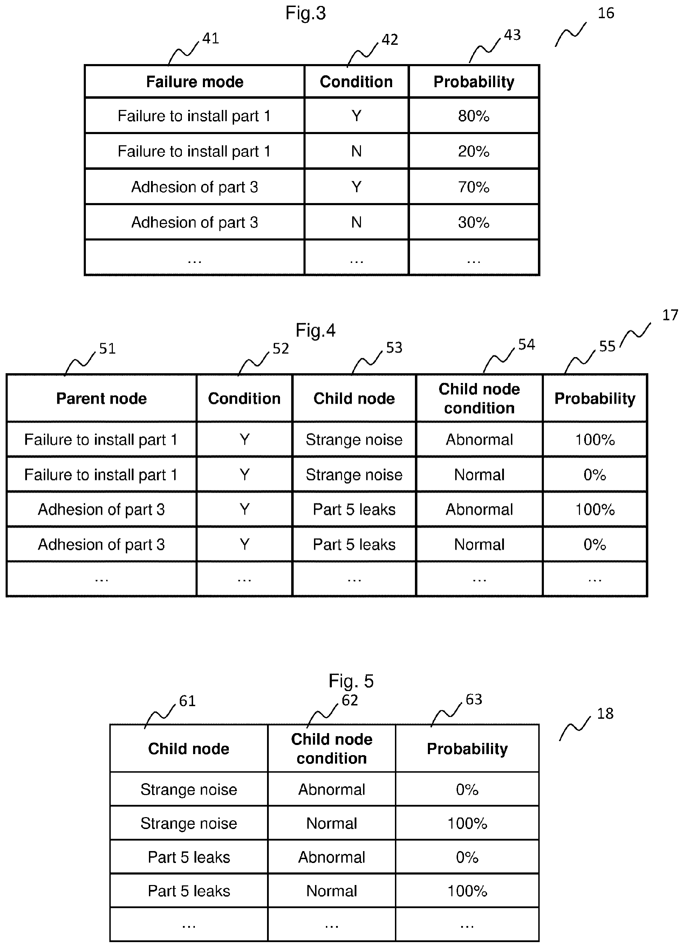

The asset knowledge database is a database in which maintenance knowledge is accumulated. Maintenance knowledge is information extracted from, for example, maintenance manuals and FMEA, and includes, for example, maintenance knowledge data as shown in Fig. 2 and data for probability setting as shown in Fig. 3~5

Fig. 2 shows an example of maintenance knowledge data in this example. Functional failures indicate failure phenomena such as cooling water not circulating, part2 not being able to be stored, etc. Failure mode indicates the cause of the failure. Check items are a column to store items to be checked, such as sensor data of equipment, environment, equipment, components, etc.

The check items are designed to identify possible phenomena that can occur when a failure mode occurs. There is not necessarily one check item corresponding to one failure mode. Alarm information that often occurs when that functional failure occurs is also included.

Fig. 3 shows an example of failure probability in this example. This data is for setting the probability when creating a Bayesian network. It contains failure modes41, where the name of the failure mode is stored, condition42, and probability43. Based on this table, the probability of occurrence of each failure mode can be known.

Condition42 stores Y or N, meaning the occurrence and non-occurrence condition of the failure mode, respectively. The conditions are set so that the probabilities of Y and N for the same failure mode add up to 1.

Probability43 contains the probability of the failure mode condition. Here, the probability of failure mode may include a fixed value, such as 50%, for failure mode condition Y and N, respectively. However, it is not limited to this and can be calculated from history. The probability of a failure mode occurrence may be, for example, the number of occurrences of the failure mode in question in the failure history divided by the total number of occurrences.

Fig. 4 is an example of child node abnormality probability at parent node abnormality in this example. It consists of parent node51, condition52, child node53, child node condition54, and probability55. It shows the probability that a check item is abnormal and normal when a certain failure mode occurs.

Parent node51 contains the name of the failure mode. Condition52 in this table contains Y, meaning the condition of occurrence of the failure mode.

Child node53 stores the check item, in this case the sensor name. Child node condition54 contains the condition of the check item, here is the condition of the sensor in question. Probability55 stores the probability of the check item condition, where the probability of the sensor condition is stored. It is set so that the probability of abnormality and normality for the same check item condition is 1.0 (100%) when added together.

A fixed value such as 100% for abnormal and 0% for normal can be set, or it can be calculated from the past failure history.

Fig. 5 shows an example of child node abnormality probability at the parent node is normal in this example. It contains child node61, child node condition62, and probability63.

Child node61 contains the check item where the check item is stored. Child node condition62 contains the check content, where the condition of the check item is stored. Probability63 stores the probability of the check item condition, where the probability of the sensor condition is stored. It is set so that the probability of abnormality and normality for the same check item condition is 1.0 (100%) when added together.

It may be set to a fixed value, such as 0% for abnormal conditions and 100% for normal conditions, or it may be calculated based on past failure history.

The causes of failure presumption section in Fig. 1 generates a maintenance knowledge Bayesian network for estimating the original cause when an abnormality occurs in the equipment, and inputs check items into the maintenance knowledge Bayesian network according to information of failure symptoms inputted by the maintenance personnel or user. The probability of occurrence of each failure mode is calculated.

<<Maintenance Knowledge Bayesian Network Generation Process>>

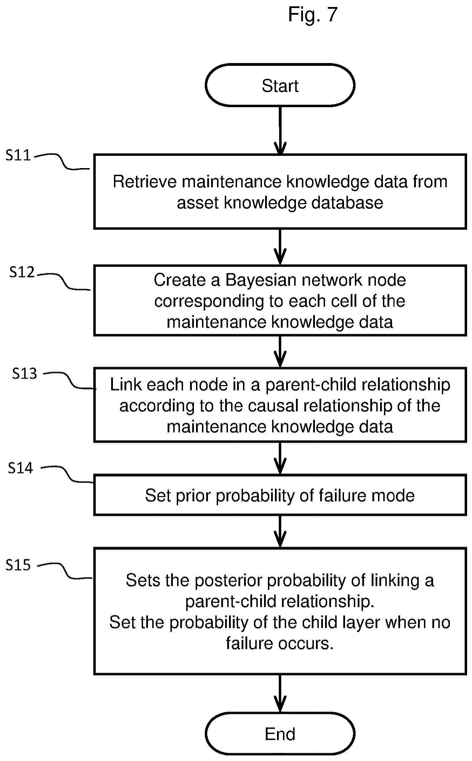

Fig. 7 shows an example flowchart of the process of generating a maintenance knowledge Bayesian network in this example. This process is performed using maintenance knowledge data15 stored in the asset knowledge database12 by means of the causes of failure presumption section9.

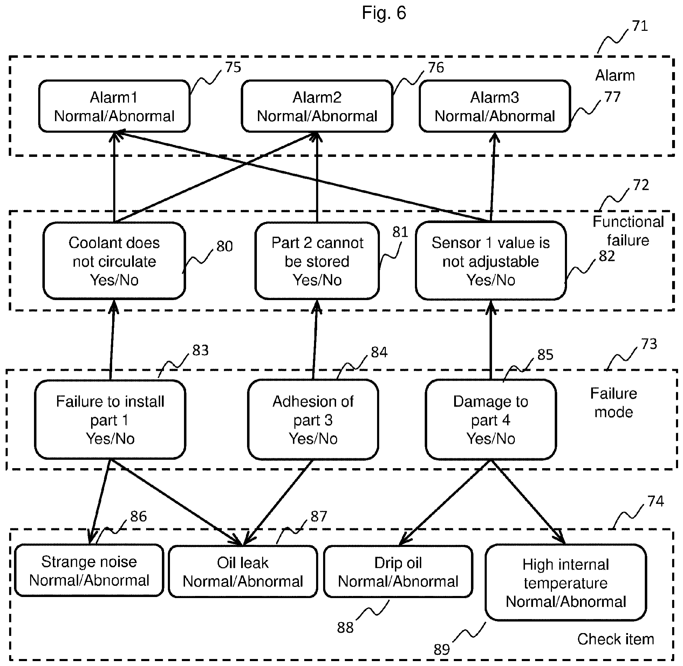

Fig. 6 shows an example of the maintenance knowledge Bayesian network in this example. This maintenance knowledge Bayesian network is a four-layered Bayesian network with alarms, functional failures, failure modes, and check items, and the arrows indicate causal relationships.

The source of the arrow is the parent node and indicates the cause. The destination of the arrow is the child node and indicates the result. The maintenance knowledge Bayesian network generation process flow is as follows.

First, maintenance knowledge data15 is obtained from the asset knowledge database (S11). Next, a node of the Bayesian network is created from each cell of the maintenance knowledge data15 (S12). Currently, cells with the same content are generated as one node.

Then, each node is linked to a parent-child relationship according to the causal relationships described in maintenance knowledge data15 (S13).

The links link each node with a parent-child relationship according to the causal relationships described in maintenance knowledge data15. Specifically, "Failure Mode"-> "Functional Failure", "Failure Mode"-> "Check Item", "Functional Failure"-> "Alarm", which is a causal relationship (parent-child relationship) and set arrows.

The probability of failure probability16 is set as a prior probability on the set arrows (S14). Next, the child node abnormality probability at parent node abnormality17 and the child node abnormality probability at the parent node is normal18 are used to set the posterior probabilities for the arrows indicating the parent-child relationship (S15).

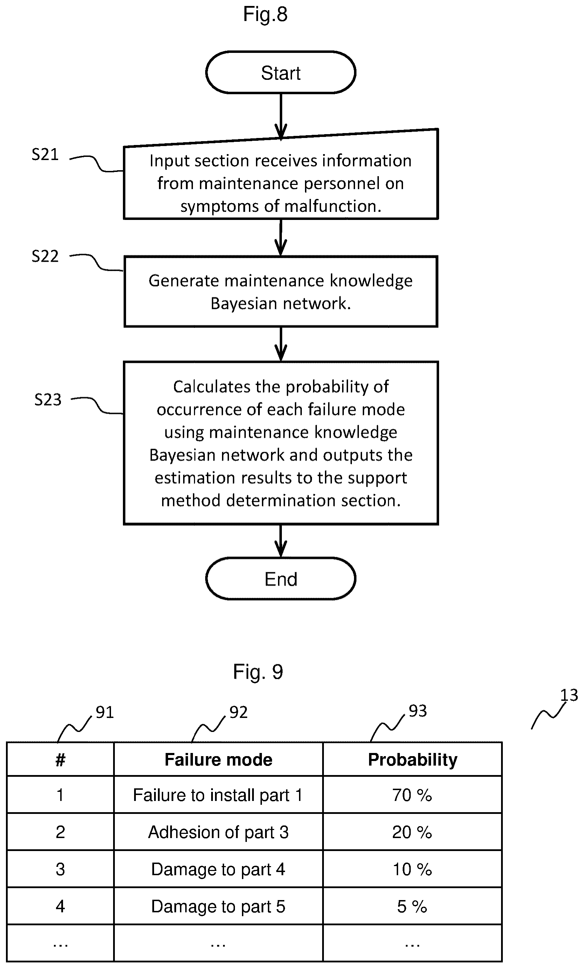

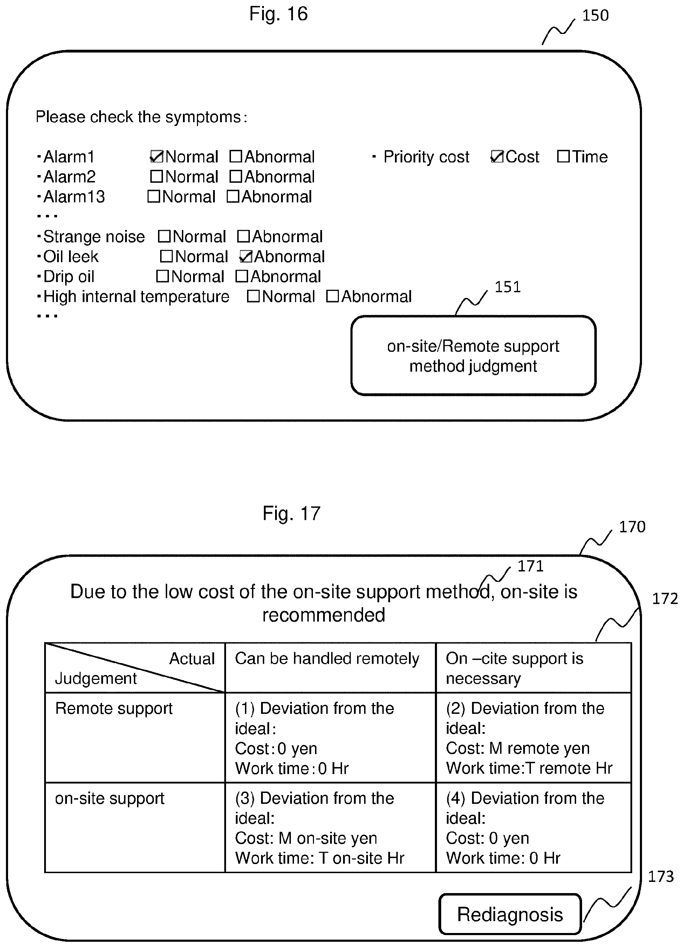

Fig. 8 shows an example flowchart of the causes of failure presumption process in this example. Receive information on the symptoms of failure via the input section (S21). Using the input screen shown on Fig. 16, according to the information on the failure of the equipment provided by the maintenance personnel or the user of the equipment, enter "abnormal" or "normal" in the check items.

"Abnormal" means that an abnormality has occurred, while "normal" means that no abnormality has occurred. If it is unclear whether an abnormality is occurring, it is not entered. For example, if there is information that "oil leaks", enter "abnormal" in the check item "oil leaks". Other check items are not entered.

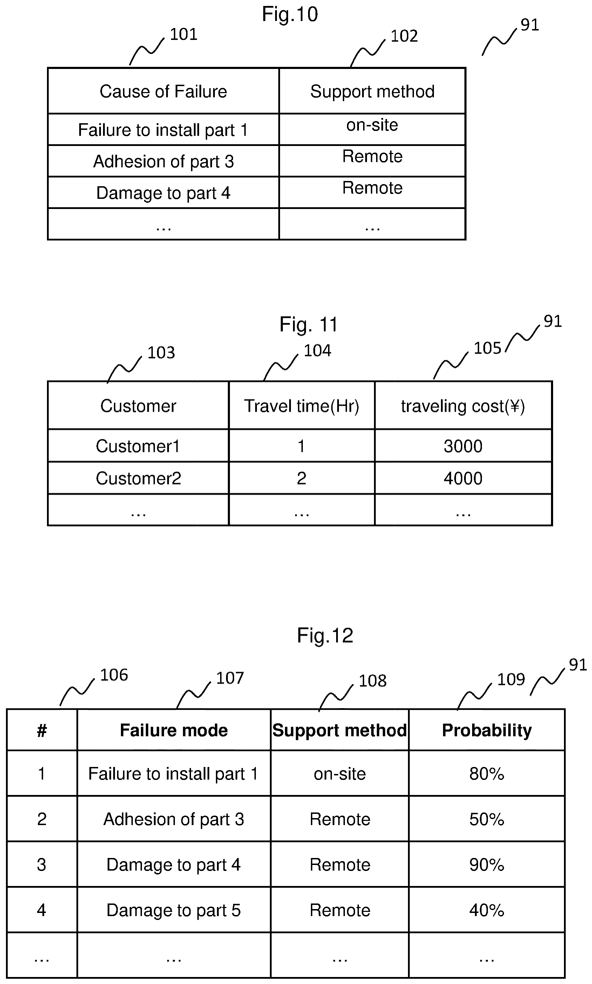

Based on the input information, a maintenance knowledge Bayesian network is generated (S22). Using the maintenance knowledge Bayesian network, the probability of occurrence of each failure mode is calculated and the estimated results are output to the support method determination section8. Causes of failure presumption result is shown on Fig. 10. The probability of occurrence93 is calculated for each failure mode92 supported.

Next, the decision support process for on-site and remote support methods is described.

Fig. 10 shows an example of a failure cause support table in this example. Cause of failure101 and failure support method102 are stored.

Fig. 11 shows an example of a travel expenses table in the example of this invention. which correspondingly stores the customer103 who owns the equipment, the round-trip travel time104 to the location where the equipment is located, and the traveling cost105 for the trip.

Fig. 12 shows an example of support method data in this example. For each failure mode107, the support method108, which indicates whether the failure must be supported on-site or can be supported remotely, and the probability109, which indicates the possibility of the failure mode, are stored correspondingly.

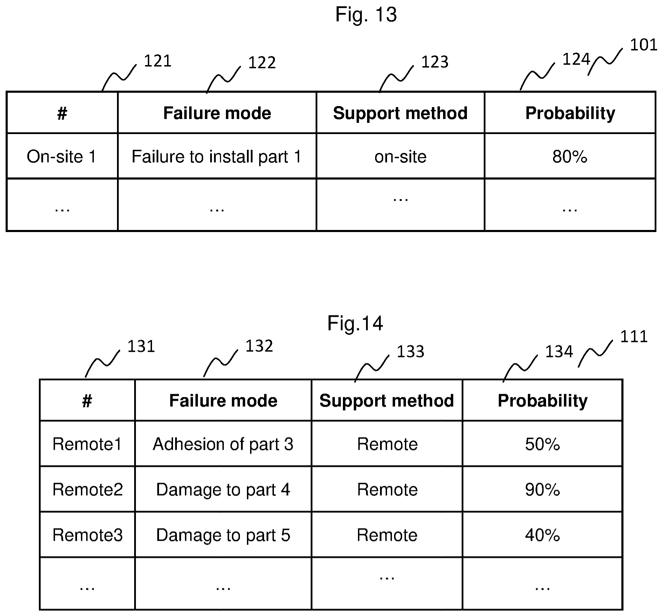

Fig. 13 shows an example of on-site support data in this example, a table that collects only those data from Fig. 12 for which the support method is on-site.

Fig. 14 shows an example of remote support data in the example of this invention, a table that collects only those data from Fig. 12 for which the support method is remote support.

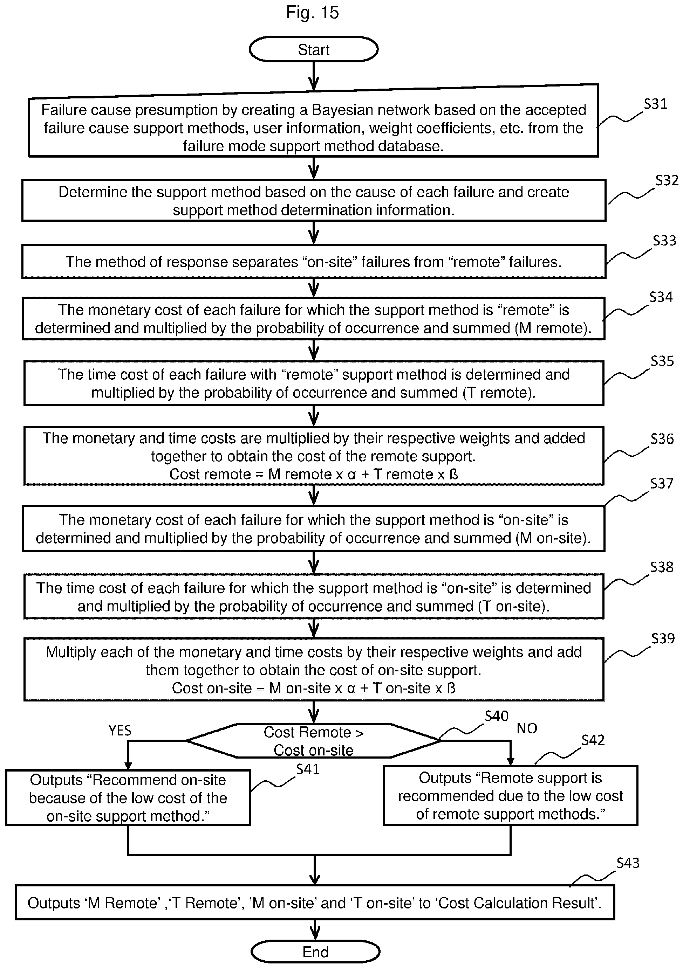

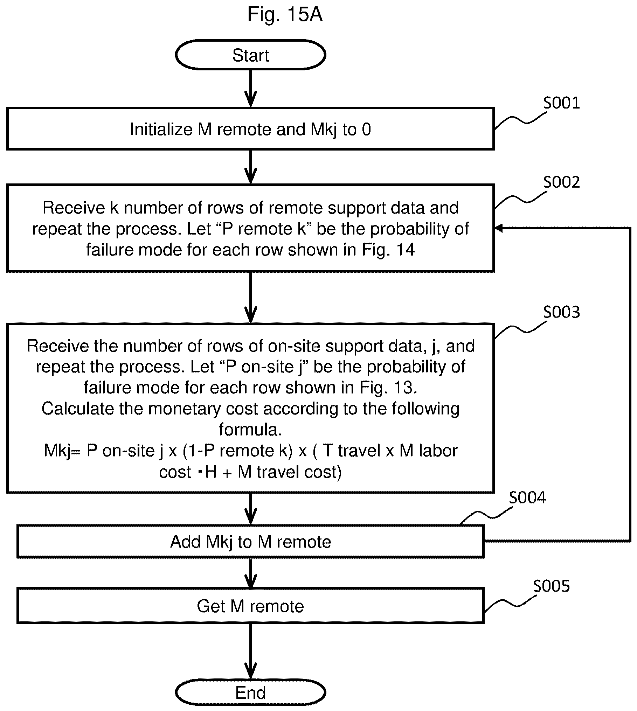

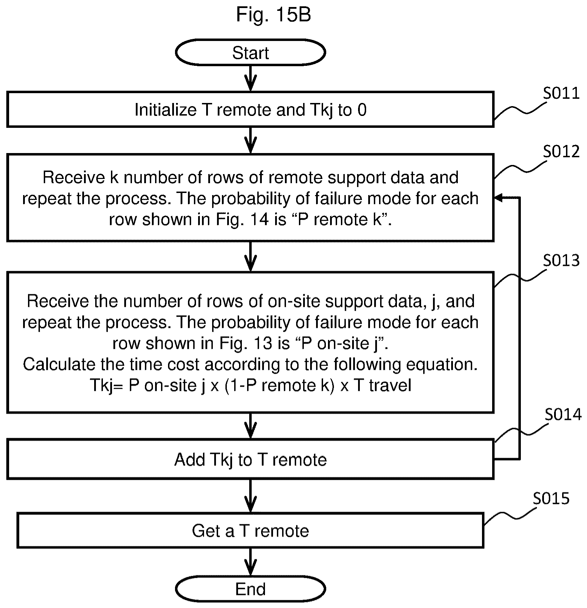

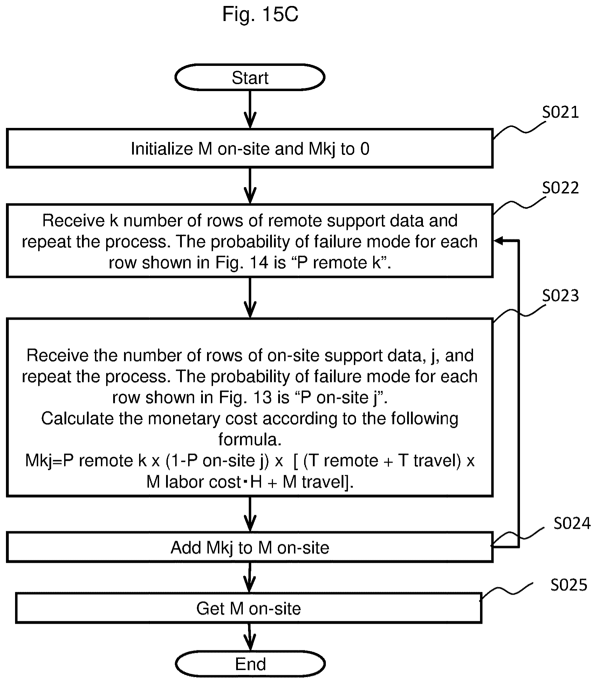

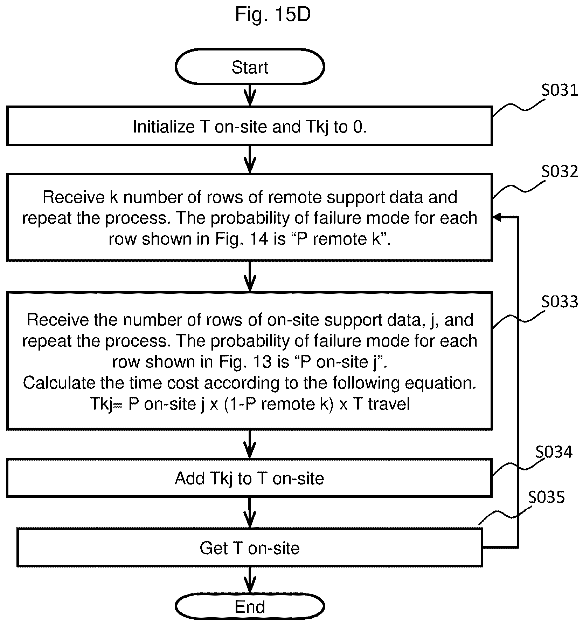

Fig. 15 illustrates an example of a flowchart of the decision support process for on-site and remote support methods in an example of this invention that uses these tables to propose a cost-effective support method.

The failure cause support method from the failure mode support method database and user information entered from the maintenance personnel terminal5 are accepted via input-output section10. At this time, weighting information indicating whether monetary cost or time cost is more important may also be received. Based on the received user information, the causes of failure presumption obtained using a Bayesian network is obtained (S31).

Based on each failure cause, the support method is determined by referring to the failure cause support TBL13, and support method judgment information91 is created, which maps the support method to the estimated probability of the failure cause (S32).

For each of the 107 failure modes in the support method judgment information91, the support method108 separates them into remote and on-site failures (S33).

In the cost estimating section19, the support method finds the monetary cost M remote for a remote support failure (S34); the support method finds the time cost T remote for each remote support failure (S35).

The M remote calculation process performed in S34 is shown on Fig. 15A. First, initialize M remote and Mkj to 0 (S001), receive the number of rows k of the remote support data, and repeat this process k times. The probability of failure mode for each row shown in Fig. 14 is "P remote k" (S002). Each time when performing process S002, receive the number of rows j of on-site support data and repeat the process. Let the probability of failure mode for each row shown in Fig. 13 be "P on-site j" and calculate the monetary cost according to equation (1) below (S003).

T travel is the travel time shown on Fig. 11, and M travel is the travel cost. M labor cost is the hourly labor cost of the maintenance personnel performing the maintenance work.

$$\text{Mkj= P on-site j} \times \text{(1-P remote k)} \times \text{(T travel} \times \text{M labor} \cdot \text{H + M travel)} \tag{1}$$

Add Mkj to M remote each time process S003 is performed (S004). k×j times S003 to obtain M remote (S005).

S35 The calculation process for T remote is shown in Fig. 15B. First, initialize T remote and Tkj to 0 (S011), receive the number of rows of remote support data k, and repeat this process k times, with the probability of failure mode "P remote k" for each row shown in Fig. 14 (S012). Each time process S002 is performed, receive the number of rows j of on-site support data and repeat the process. The probability of failure mode for each row shown in Fig. 13 is "P on-site j" and the time cost is calculated according to the following equation (2) (S013).

$$Tkj = P \text{ on-site } j \times (1-P \text{ remote } k) \times T \text{ travel (2)}$$

Add Tkj to T remote each time process S003 is performed (S014). k×j times S003 to obtain M remote (S015).

Based on the weighting information, the monetary cost and time cost are multiplied by their respective weights and added together to obtain the cost remoteness, which is the cost of remote support (S36). The weighting information may be set to predetermined weights, or the monetary cost and time cost may be given the same weighting.

Next, cost estimating section 19 finds the M travel (S37) and the T travel (S38), which are the total monetary cost and the total time cost, respectively, for the failure of the support method. Similarly, cost business trips based on weighting information are obtained (S39).

Fig. 15C shows the M travel calculation process performed in S36. First, initialize M travel and Mkj to 0 (S021), receive the number of rows of remote support data k, and repeat this process k times, with the probability of failure mode "P remote k" for each row shown in Fig. 14 (S022). Each time process S022 is performed, receive the number of rows j of on-site support data and repeat the process. The probability of failure mode for each row shown in Fig. 13 is "P on-site j" and the monetary cost is calculated according to equation (3) below (S023).

$$Mkj= P \text{ remote } k \times (1-P \text{ on-site } j) \times [(T \text{ remote} + T \text{ travel}) \times M \text{ labor} \cdot H + M \text{ travel}] \qquad (3)$$

Add Mkj to M on-site when performing process S023 each time (S024). k×j times S023 to obtain M on-site (S025).

The process of calculating T on-site in S37 is shown in Fig. 15D. First, initialize T on-site and Tkj (S031), receive the number of rows of remote support data k, and repeat this process k times, with the probability of failure mode "P remote k" for each row shown in Fig. 14 (S032). Each time process S032 is performed, receive the number of rows j of on-site support data and repeat the process. Let the probability of failure mode for each row shown in Fig. 13 be "P on-site j" and calculate the time cost according to the following equation (4) (S033).

$$Tkj = P \text{ on-site } j \times (1-P \text{ remote } k) \times T \text{ travel (4)}$$

Add Tkj to T on-site when performing process S033 each time (S034). k×j times S033 to obtain T on-site (S035).

The cost estimating section19 compares the cost of remote support with the cost of on-site support (S40), and if the cost of remote support is higher, the output section outputs the result screen170 shown in Fig. 17, "Since the cost of the on-site support method is lower, we recommend on-site support" to the maintenance personnel (S41). If the cost of the on-site support method is higher, the output part outputs information to the maintenance personnel, such as "Since the cost of the remote support method is lower, we recommend the remote support method" (S42).

Finally, "M remote", "T remote", "M on-site", and "T on-site" are output in the cost calculation results 172 (S43).

Fig. 17 shows an example of the result screen in this example. The cost calculation results 172 show the costs for four cases. The four cases are the support method (on-site/remote) for the failure mode that occurred and the support method (on-site/remote) that was adopted at the discretion of the maintenance staff.

Two of the four cases are ideal. Failure mode requiring on-site support occurs and the maintenance personnel provide on-site support, and a failure mode requiring remote support occurs and the maintenance personnel provide remote support. The ideal case means that no non-essential costs or time are incurred.

For example, if a failure mode F1 occurs that requires on-site support, and the maintenance personnel decides to provide on-site support using the support method determined from the symptoms, this is an ideal case because it will only cost money and time to travel to the site would involve in.

If a failure mode F1 that requires on-site support occurs, and the maintenance personnel decides to provide remote support based on the support method judged from the symptoms, the equipment will not recover easily after remote support, and on-site support will be required. This is not an ideal case because it would cost not only the cost and time of travel, but also the cost of remote support.

The cost calculation results 172 show the cost of the four cases, the cost and time spent over the ideal case in (1)~(4). (1) and (4) are the ideal cases, and deviations from the ideal are shown as cost. 0 yen and work time: 0 hours. In (2), deviation from the ideal is indicated as cost: Indicate "M remote" yen Work time: "T remote" hours. In (3), the deviation from the ideal is shown as Cost: Indicate "M on-site" yen Work time: "T on-site" hours. "M Remote", "T Remote", "M on-site", and "T on-site" are the values calculated from the flowchart shown on Fig. 15.

REFERENCE SIGNS LIST

| | |
|---|---|
| 1 | Equipment maintenance system |
| 2 | CPU |
| 3 | Memory |
| 4 | External storage |
| 5 | Maintenance personnel terminal |
| 6 | Maintenance personnel |
| 7 | Weight coefficient determination section |
| 8 | Support method determination section |
| 9 | Causes of failure presumption section |
| 10 | Input-output section |
| 11 | Failure mode support method database |
| 12 | Asset knowledge database |
| 13 | Failure cause support TBL |
| 14 | Travel expenses TBL |
| 15 | Maintenance knowledge data |
| 16 | Failure probability |
| 17 | Child node abnormality probability at parent node abnormality |
| 18 | Child node abnormality probability at parent node is normal |
| 19 | Cost estimating section |

**Claims**

1. An equipment maintenance system determines a support method to support equipment failures comprising:

an asset knowledge database stores equipment failures and their causes are registered,
an input section receives fault information output from the equipment,
a cause of failure presumption section refers to the asset knowledge database and presumes the causes of failure based on the failure information received by the input section,
a support method determination section determines the support method to support the presumed cause of failure,
a cost estimating section estimates the cost required for the support method determined by the support method determination section dividing into the cost of on-site support, in which technicians visit the site where the equipment is installed, and the cost of remote support, in which technicians support the equipment remotely, and
an output section outputs the support method with the lowest cost among the cost of on-site support and the cost of remote support estimated by the cost estimating section.

2. The equipment maintenance system according to claim 1,
wherein the cost estimating section estimates the cost of travel and time for the technician to travel to the site when estimating the cost of on-site support.

3. The equipment maintenance system according to claim 2,

wherein the asset knowledge database stores the probability of the occurrence of the cause of failure associated with the failure information,
the causes of failure presumption section presume the cause of failure based on the probability of occurrence of the cause of failure.

4. The equipment maintenance system according to claim 2,

wherein the input section receives cost information indicating whether priority is given to the cost or time required to support a failure,
cost estimating section is equipped with a weight coefficient calculation section that determines a weight coefficient indicating whether priority is given to cost or time used when estimating costs based on cost information.

**5.** The equipment maintenance system according to claim 2,

the causes of failure presumption section presume multiple causes of failure,
the cost estimating section estimates the cost for each cause of failure and calculates the total cost of on-site support and the total cost of remote support,
the output section outputs the smaller of the total cost of on-site support and the total cost of remote support.

**6.** An equipment maintenance method determining a support method to support equipment failures comprising:

an asset knowledge database storing equipment failures and their causes are registered,
receiving fault information output from the equipment,
referring to the asset knowledge database and presuming the causes of failure based on the failure information received by the input section,
determining the support method to support the presumed cause of failure,
estimating the cost required for the support method determined by the support method determination section dividing into the cost of on-site support, in which technicians visit the site where the equipment is installed, and the cost of remote support, in which technicians support the equipment remotely, and
outputting the support method with the lowest cost among the cost of on-site support and the cost of remote support estimated.

EP 4 723 011 A1

Fig.1

## Fig.2

| Functional failure | Failure mode | Check Item | Alarm |
|---|---|---|---|
| Coolant does not circulate | Failure to install part 1 | Strange noise | - |
| Part 2 cannot be stored | Adhesion of part 3 | Oil leak | - |
| Volume value is not adjustable | Damage to part 4 | Drip oil | - |
| Fan rotation is not adjustable | Damage to part 4 | High internal temperature | - |
| Cooling water cannot be circulated | - | - | Alarm1, Alarm2 |
| Part 2 cannot be stored | - | - | Alarm2 |
| Temperature cannot be adjusted. | - | - | Alarm1, Alarm3 |
| ... | ... | ... | ... |

## Fig.3

| Failure mode | Condition | Probability |
|---|---|---|
| Failure to install part 1 | Y | 80% |
| Failure to install part 1 | N | 20% |
| Adhesion of part 3 | Y | 70% |
| Adhesion of part 3 | N | 30% |
| ... | ... | ... |

## Fig.4

| Parent node | Condition | Child node | Child node condition | Probability |
|---|---|---|---|---|
| Failure to install part 1 | Y | Strange noise | Abnormal | 100% |
| Failure to install part 1 | Y | Strange noise | Normal | 0% |
| Adhesion of part 3 | Y | Part 5 leaks | Abnormal | 100% |
| Adhesion of part 3 | Y | Part 5 leaks | Normal | 0% |
| ... | ... | ... | ... | ... |

## Fig. 5

| Child node | Child node condition | Probability |
|---|---|---|
| Strange noise | Abnormal | 0% |
| Strange noise | Normal | 100% |
| Part 5 leaks | Abnormal | 0% |
| Part 5 leaks | Normal | 100% |
| ... | ... | ... |

Fig. 6

Fig. 7

Start

S11 — Retrieve maintenance knowledge data from asset knowledge database

S12 — Create a Bayesian network node corresponding to each cell of the maintenance knowledge data

S13 — Link each node in a parent-child relationship according to the causal relationship of the maintenance knowledge data

S14 — Set prior probability of failure mode

S15 — Sets the posterior probability of linking a parent-child relationship.
Set the probability of the child layer when no failure occurs.

End

Fig.8

```
          ┌─────────────┐
          │    Start    │
          └─────────────┘
                 │
                 ▼
     ╱──────────────────────────╲
S21 │ Input section receives information
    │ from maintenance personnel on
    │ symptoms of malfunction.
     └──────────────────────────┘
                 │
                 ▼
      ┌──────────────────────────┐
S22   │ Generate maintenance knowledge
      │ Bayesian network.
      └──────────────────────────┘
                 │
                 ▼
      ┌──────────────────────────┐
      │ Calculates the probability of
S23   │ occurrence of each failure mode
      │ using maintenance knowledge
      │ Bayesian network and outputs the
      │ estimation results to the support
      │ method determination section.
      └──────────────────────────┘
                 │
                 ▼
          ┌─────────────┐
          │     End     │
          └─────────────┘
```

Fig. 9

| # | Failure mode | Probability |
|---|---|---|
| 1 | Failure to install part 1 | 70 % |
| 2 | Adhesion of part 3 | 20 % |
| 3 | Damage to part 4 | 10 % |
| 4 | Damage to part 5 | 5 % |
| ... | ... | ... |

91    92    93    13

Fig.10

| Cause of Failure | Support method |
|---|---|
| Failure to install part 1 | on-site |
| Adhesion of part 3 | Remote |
| Damage to part 4 | Remote |
| ... | ... |

Fig. 11

| Customer | Travel time(Hr) | traveling cost(¥) |
|---|---|---|
| Customer1 | 1 | 3000 |
| Customer2 | 2 | 4000 |
| ... | ... | ... |

Fig.12

| # | Failure mode | Support method | Probability |
|---|---|---|---|
| 1 | Failure to install part 1 | on-site | 80% |
| 2 | Adhesion of part 3 | Remote | 50% |
| 3 | Damage to part 4 | Remote | 90% |
| 4 | Damage to part 5 | Remote | 40% |
| ... | ... | ... | ... |

Fig. 13

| # (121) | Failure mode (122) | Support method (123) | Probability (124) / 101 |
|---|---|---|---|
| On-site 1 | Failure to install part 1 | on-site | 80% |
| ... | ... | ... | ... |

Fig.14

| # (131) | Failure mode (132) | Support method (133) | Probability (134) / 111 |
|---|---|---|---|
| Remote1 | Adhesion of part 3 | Remote | 50% |
| Remote2 | Damage to part 4 | Remote | 90% |
| Remote3 | Damage to part 5 | Remote | 40% |
| ... | ... | ... | ... |

## Fig. 15

Start

Failure cause presumption by creating a Bayesian network based on the accepted failure cause support methods, user information, weight coefficients, etc. from the failure mode support method database. — S31

Determine the support method based on the cause of each failure and create support method determination information. — S32

The method of response separates "on-site" failures from "remote" failures. — S33

The monetary cost of each failure for which the support method is "remote" is determined and multiplied by the probability of occurrence and summed (M remote). — S34

The time cost of each failure with "remote" support method is determined and multiplied by the probability of occurrence and summed (T remote). — S35

The monetary and time costs are multiplied by their respective weights and added together to obtain the cost of the remote support.
Cost remote = M remote x α + T remote x ß — S36

The monetary cost of each failure for which the support method is "on-site" is determined and multiplied by the probability of occurrence and summed (M on-site). — S37

The time cost of each failure for which the support method is "on-site" is determined and multiplied by the probability of occurrence and summed (T on-site). — S38

Multiply each of the monetary and time costs by their respective weights and add them together to obtain the cost of on-site support.
Cost on-site = M on-site x α + T on-site x ß — S39

Cost Remote > Cost on-site — S40

YES

NO

Outputs "Recommend on-site because of the low cost of the on-site support method." — S41

Outputs "Remote support is recommended due to the low cost of remote support methods." — S42

Outputs 'M Remote' ,'T Remote', 'M on-site' and 'T on-site' to 'Cost Calculation Result'. — S43

End

## Fig. 15A

```
      Start
        │
        ▼
```
Initialize M remote and Mkj to 0  — S001
```
        │
        ▼
```
Receive k number of rows of remote support data and repeat the process. Let "P remote k" be the probability of failure mode for each row shown in Fig. 14  — S002
```
        │
        ▼
```
Receive the number of rows of on-site support data, j, and repeat the process. Let "P on-site j" be the probability of failure mode for each row shown in Fig. 13.
Calculate the monetary cost according to the following formula.
Mkj= P on-site j x (1-P remote k) x ( T travel x M labor cost ·H + M travel cost)  — S003
```
        │
        ▼
```
Add Mkj to M remote  — S004
```
        │
        ▼
```
Get M remote  — S005
```
        │
        ▼
      End
```

## Fig. 15B

Start

Initialize T remote and Tkj to 0 — S011

Receive k number of rows of remote support data and repeat the process. The probability of failure mode for each row shown in Fig. 14 is "P remote k". — S012

Receive the number of rows of on-site support data, j, and repeat the process. The probability of failure mode for each row shown in Fig. 13 is "P on-site j".
Calculate the time cost according to the following equation.
$Tkj= P$ on-site $j \times (1-P$ remote $k) \times T$ travel — S013

Add Tkj to T remote — S014

Get a T remote — S015

End

## Fig. 15C

```
                    ┌─────────────────┐
                    │      Start      │
                    └─────────────────┘
                             │
                             ▼
  ┌──────────────────────────────────────────────────┐      S021
  │        Initialize M on-site and Mkj to 0          │
  └──────────────────────────────────────────────────┘
                             │
                             ▼
  ┌──────────────────────────────────────────────────┐      S022
  │  Receive k number of rows of remote support data  │
  │   and repeat the process. The probability of      │◄──┐
  │  failure mode for each row shown in Fig. 14 is     │   │
  │              "P remote k".                         │   │
  └──────────────────────────────────────────────────┘   │
                             │                             │
                             ▼                             │  S023
  ┌──────────────────────────────────────────────────┐   │
  │  Receive the number of rows of on-site support    │   │
  │  data, j, and repeat the process. The probability │   │
  │  of failure mode for each row shown in Fig. 13 is │   │
  │               "P on-site j".                       │   │
  │  Calculate the monetary cost according to the     │   │
  │                following formula.                  │   │
  │  Mkj=P remote k x (1-P on-site j) x [ (T remote   │   │
  │  + T travel) x M labor cost·H + M travel].         │   │
  └──────────────────────────────────────────────────┘   │
                             │                             │
                             ▼                             │  S024
  ┌──────────────────────────────────────────────────┐   │
  │              Add Mkj to M on-site                  │───┘
  └──────────────────────────────────────────────────┘
                             │
                             ▼                                S025
  ┌──────────────────────────────────────────────────┐
  │                 Get M on-site                      │
  └──────────────────────────────────────────────────┘
                             │
                             ▼
                    ┌─────────────────┐
                    │       End       │
                    └─────────────────┘
```

## Fig. 15D

```
              ┌─────────────────┐
              │      Start       │
              └─────────────────┘
                       │
                       ▼
┌────────────────────────────────────────────────┐      S031
│        Initialize T on-site and Tkj to 0.        │
└────────────────────────────────────────────────┘
                       │
                       ▼
┌────────────────────────────────────────────────┐      S032
│  Receive k number of rows of remote support      │
│  data and repeat the process. The probability    │
│  of failure mode for each row shown in Fig. 14   │
│  is "P remote k".                                │
└────────────────────────────────────────────────┘
                       │
                       ▼
┌────────────────────────────────────────────────┐      S033
│  Receive the number of rows of on-site support   │
│  data, j, and repeat the process. The            │
│  probability of failure mode for each row shown  │
│  in Fig. 13 is "P on-site j".                    │
│  Calculate the time cost according to the        │
│  following equation.                             │
│  Tkj= P on-site j x (1-P remote k) x T travel    │
└────────────────────────────────────────────────┘
                       │
                       ▼
┌────────────────────────────────────────────────┐      S034
│              Add Tkj to T on-site                │
└────────────────────────────────────────────────┘
                       │                                  S035
                       ▼
┌────────────────────────────────────────────────┐
│                 Get T on-site                    │
└────────────────────────────────────────────────┘
                       │
                       ▼
              ┌─────────────────┐
              │       End        │
              └─────────────────┘
```

Receive k number of rows of remote support data and repeat the process. The probability of failure mode for each row shown in Fig. 14 is "P remote k".

Receive the number of rows of on-site support data, j, and repeat the process. The probability of failure mode for each row shown in Fig. 13 is "P on-site j".
Calculate the time cost according to the following equation.
$Tkj = P$ on-site $j$ x $(1-P$ remote $k)$ x $T$ travel

Add Tkj to T on-site

Get T on-site

Fig. 16

150

Please check the symptoms:

| | | |
|---|---|---|
| •Alarm1 | ☑Normal ☐Abnormal | • Priority cost ☑Cost ☐Time |
| •Alarm2 | ☐Normal ☐Abnormal | |
| •Alarm13 | ☐Normal ☐Abnormal | |

...

•Strange noise ☐Normal ☐Abnormal
•Oil leek        ☐Normal ☑Abnormal
•Drip oil        ☐Normal ☐Abnormal
•High internal temperature ☐Normal ☐Abnormal
...

151

on-site/Remote support
method judgment

Fig. 17

170

171

Due to the low cost of the on-site support method, on-site is
recommended

172

| Actual<br>Judgement | Can be handled remotely | On –cite support is necessary |
|---|---|---|
| Remote support | (1) Deviation from the ideal:<br>Cost: 0 yen<br>Work time: 0 Hr | (2) Deviation from the ideal:<br>Cost: M remote yen<br>Work time: T remote Hr |
| on-site support | (3) Deviation from the ideal:<br>Cost: M on-site yen<br>Work time: T on-site Hr | (4) Deviation from the ideal:<br>Cost: 0 yen<br>Work time: 0 Hr |

173

Rediagnosis

## INTERNATIONAL SEARCH REPORT

| International application No. |
|---|
| **PCT/JP2024/000582** |

### A. CLASSIFICATION OF SUBJECT MATTER

*G06Q 10/20*(2023.01)i

FI: G06Q10/20

According to International Patent Classification (IPC) or to both national classification and IPC

### B. FIELDS SEARCHED

Minimum documentation searched (classification system followed by classification symbols)

G06Q10/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2005-128714 A (KABUSHIKI KAISHA TOSHIBA) 19 May 2005 (2005-05-19) entire text, all drawings | 1-6 |
| A | JP 2003-303244 A (OSAKA GAS CO., LTD.) 24 October 2003 (2003-10-24) entire text, all drawings | 1-6 |
| A | JP 2021-124990 A (HITACHI, LTD.) 30 August 2021 (2021-08-30) entire text, all drawings | 1-6 |
| A | JP 2014-191515 A (FUJITSU FSAS INC.) 06 October 2014 (2014-10-06) entire text, all drawings | 1-6 |

☐ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **08 February 2024** | **20 February 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/000582**

| Patent document cited in search report | | | Publication date (day/month/year) | Patent family member(s) | | | Publication date (day/month/year) |
|---|---|---|---|---|---|---|---|
| JP | 2005-128714 | A | 19 May 2005 | (Family: none) | | | |
| JP | 2003-303244 | A | 24 October 2003 | (Family: none) | | | |
| JP | 2021-124990 | A | 30 August 2021 | US | 2021/0248557 | A1 | |
| | | | | EP | 3862834 | A1 | |
| JP | 2014-191515 | A | 06 October 2014 | (Family: none) | | | |

Form PCT/ISA/210 (patent family annex) (July 2022)

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013029881 A